# EUROPÄISCHE PATENTANMELDUNG

(11) **EP 1 148 622 A2**
(43) Veröffentlichungstag der Anmeldung: **24.10.2001**
(21) Anmeldenummer: 01104089.6
(22) Anmeldetag: 21.02.2001
(51) Int. Cl.: H02M 3/10

(54) **Verfahren zur pulsweitenmodulierten Ansteuerung einer Endstufe**

(30) Priorität: 18.04.2000 DE 10019118
(71) Anmelder: Mannesmann VDO Aktiengesellschaft, 60388 Frankfurt am Main (DE)
(72) Erfinder: Bay, Wolfgang, 65936 Frankfurt (DE)
(74) Vertreter: Rassler, Andrea, Dipl.-Phys.

(57) **Zusammenfassung**

Bei einem Verfahren zur pulsweitenmodulierten Ansteuerung einer Endstufe, die zur Versorgung eines die Endstufe während des Betriebes kühlenden Aggregats dient, erfolgt bei höherer Temperatur der Endstufe eine Ansteuerung, die eine geringe Verlustleistung in der Endstufe zur Folge hat. Bei niedrigerer Temperatur der Endstufe erfolgt die Ansteuerung derart, daß die Verlustleistung höher ist.

## Beschreibung

Die Erfindung betrifft ein Verfahren zur pulsweitenmodulierten Ansteuerung einer Endstufe, die zur Versorgung eines die Endstufe während des Betriebes kühlenden Aggregats dient.

Werden Elektromotoren zum Antrieb von kühlenden Aggregaten, insbesondere Kältemaschinen von Klimaanlagen oder Lüftern in Kraftfahrzeugen, benutzt, so kann die Kühlung auch zur Kühlung der Endstufe verwendet werden. Bei der pulsweitenmodulierten Ansteuerung (PWM) der Endstufe sind verschiedene Anforderungen zu berücksichtigen - unter anderem in Hinblick auf die elektromagnetische Verträglichkeit und Geräuschbelästigungen bei Frequenzen unterhalb der Hörschwelle. Diese Anforderungen stehen jedoch häufig im Gegensatz zu einer hohen Flankensteilheit oder zu einer niedrigen Frequenz der Impulse, welche zur Erzielung einer möglichst geringen Verlustleistung in der Endstufe erstrebenswert sind.

Aufgabe der vorliegenden Erfindung ist es, eine Ansteuerung einer Endstufe, die zur Versorgung eines die Endstufe während des Betriebes kühlenden Aggregats dient, derart auszubilden, daß sowohl den genannten Umweltbedingungen im allgemeinen entsprochen wird als auch eine Überlastung der Endstufe bei hohen Umgebungstemperaturen durch zu hohe Verlustleistung vermieden wird.

Diese Aufgabe wird erfindungsgemäß dadurch erfüllt, daß bei höherer Temperatur der Endstufe eine Ansteuerung erfolgt, die eine geringe Verlustleistung in der Endstufe zur Folge hat und daß bei niedrigerer Temperatur der Endstufe die Ansteuerung derart erfolgt, daß die Verlustleistung höher ist.

Die Erfindung beruht auf der Erkenntnis, daß durch die Kühlung während des Betriebes zugunsten der Umweltbedingungen eine höhere Verlustleistung, während bei nicht vorhandener Kühlung, was im wesentlichen in einer kurzen Anlaufphase der Fall ist, ein etwas ungünstigeres Umweltverhalten zugelassen werden kann.

Eine erste Ausführungsform der Erfindung verringert die Verlustleistung während der Anlaufphase dadurch, daß die Ansteuerung bei höherer Temperatur mit Impulsen höherer Flankensteilheit und bei niedrigerer Temperatur mit Impulsen niedrigerer Flankensteilheit erfolgt, während eine zweite Ausführungsform die Verlustleistung während der Anlaufphase dadurch vermindert, daß die Ansteuerung bei höherer Temperatur mit niedrigerer PWM-Trägerfrequenz erfolgt als bei niedrigerer Temperatur. Es können auch beide Ausführungsformen miteinander kombiniert werden.

Je nach Voraussetzungen im einzelnen kann bei dem erfindungsgemäßen Verfahren vorgesehen sein, daß ein allmählicher Übergang oder daß eine Umschaltung zwischen zwei Ansteuerungsarten erfolgt.

Eine weitere Ausgestaltung des erfindungsgemäßen Verfahrens geht davon aus, daß die höheren Temperaturen in einer Anlaufphase auftreten und sieht deshalb vor, daß der Übergang von einer Ansteuerung, die bei einer höheren Temperatur vorgesehen ist, auf eine Ansteuerung für eine niedrigere Temperatur zeitgesteuert nach dem Einschalten erfolgt. Dabei ist weder ein Temperatursensor noch eine dessen Ausgangssignal auswertende Schaltung erforderlich.

Nach einer anderen Ausführungsform ist vorgesehen, daß zwischen den Ansteuerungsarten in Abhängigkeit von einer gemessenen Temperatur gewählt wird. Hierbei werden auch mögliche Temperaturerhöhungen außerhalb der Anlaufphase berücksichtigt. Gegebenenfalls können bereits vorhandene Temperatursensoren mitbenutzt werden.

Die Erfindung läßt zahlreiche Ausführungsformen zu. Eine davon ist schematisch in der Zeichnung anhand mehrerer Figuren dargestellt und nachfolgend beschrieben. Es zeigt:
- Figur 1: eine Anordnung zur Durchführung des erfindungsgemäßen Verfahrens,
- Figur 2: Impulsdiagramme bei einer ersten Ausführungsform des erfindungsgemäßen Verfahrens,
- Figur 3: Impulsdiagramme bei einer zweiten Ausführungsform,
- Figur 4: die Frequenz der Ansteuerung in Abhängigkeit von der Zeit,
- Figur 5: die Abhängigkeit der Frequenz von der Temperatur,
- Figur 6: Flankensteilheit (t_{R/F}) in Abhängigkeit von der Temperatur und
- Figur 7: Flankensteilheit (t_{R/F}) in Abhängigkeit von der Zeit.

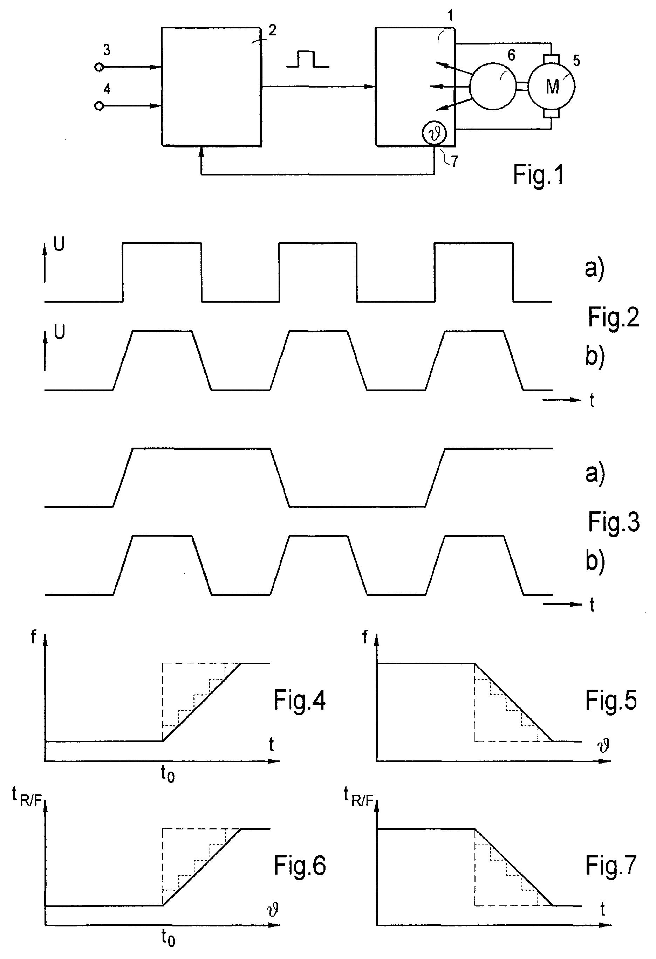

Figur 1 zeigt als Blockschaltbild in stark vereinfachter Form eine Endstufe 1, die von einem Steuergerät 2 mit pulsbreitenmodulierten Signalen angesteuert wird. Dem Steuergerät können über die Eingänge 3 verschiedene zur Steuerung erforderliche Signale, beispielsweise Ein-/Aus-Signale oder Drehzahl-/Temperaturvorgaben zugeführt werden. Die Endstufe 1 versorgt einen Motor 5, der ein Kühl-Aggregat 6 antreibt. Das Kühl-Aggregat steht in wärmeleitender Verbindung mit der Endstufe 1, was durch Pfeile symbolisiert ist. Ein Temperatursensor 7 mißt die Temperatur der Endstufe 1 oder eines anderen Punktes im System, der eine gute Korrelation mit der Endstufentemperatur aufweist, und leitet das Meßergebnis zum Steuergerät 2.

Bei der ersten Ausführungsform des erfindungsgemäßen Verfahrens nach Figur 2a) erhält die Endstufe 1 Impulse mit steilen Flanken, so daß die Verlustleistung in der Endstufe 1 so gering ist, daß auch bei höherer Temperatur die zulässige Maximal-Temperatur der Endstufen-Transistoren nicht überschritten wird. Derartige hohe Temperaturen können auch beispielsweise im Motorraum auftreten, wenn ein Kraftfahrzeug nach schneller Fahrt und/oder bei hohen Umgebungstemperaturen abgestellt wird. Nach einer Anlaufphase wird die Endstufe 1 durch das Kühlaggregat 6 gekühlt. Dann wird auf die in Figur 2b) gezeigten Impulse umgeschaltet, die wegen ihrer geringeren Flankensteilheit zwar eine höhere Verlustleistung in der Endstufe zur Folge haben, jedoch eine geringere Störwirkung in höheren Frequenzbereichen der elektromagnetischen Abstrahlung aufweisen.

Figur 3 zeigt eine Alternative, nämlich die Umschaltung der Trägerfrequenz, wobei in der in Figur 3a) gezeigten Anlaufphase eine niedrigere Frequenz vorgesehen ist, so daß die durch die endlichen Flanken bedingte Verlustleistung geringer ist. Dafür ist möglicherweise eine kurzzeitige Geräuschabstrahlung vorhanden, wenn die Frequenz unterhalb von 16 kHz liegt. Nach Erreichen der niedrigeren Betriebstemperatur wird auf eine hohe Frequenz oberhalb des Hörbereichs mit nicht allzu steilen Flanken umgeschaltet (Figur 3b)).

Figur 4 zeigt die Umschaltung der Frequenz nach einer vorgegebenen Zeit t₀ von einem niedrigeren auf einen höheren Wert, wie es beispielsweise in Figur 3 dargestellt ist.

Figur 5 zeigt die Frequenz f in Abhängigkeit von der Temperatur theta, wobei bei niedrigeren Temperaturen die Frequenz hoch und bei höheren niedrig ist. Figur 6 stellt die Flankensteilheit t_{R/F} als Funktion der Temperatur und Figur 7 als Funktion der Zeit dar.

Der Übergang kann je nach vorliegenden Voraussetzungen kontinuierlich (durchgezogene Linie) oder in mehreren Stufen oder in einer Stufe (gestrichelte Linien) erfolgen.

Die Anlaufzeit ist in vielen Fällen recht kurz und beträgt beispielsweise bei Klimakompressoren 10 s bis 15 s.

## Patentansprüche

1. Verfahren zur pulsweitenmodulierten Ansteuerung einer Endstufe, die zur Versorgung eines die Endstufe während des Betriebes kühlenden Aggregats dient, **dadurch gekennzeichnet, daß** bei höherer Temperatur der Endstufe eine Ansteuerung erfolgt, die eine geringe Verlustleistung in der Endstufe zur Folge hat und daß bei niedrigerer Temperatur der Endstufe die Ansteuerung derart erfolgt, daß die Verlustleistung höher ist.

2. Verfahren nach Anspruch 1, **dadurch gekennzeichnet, daß** die Ansteuerung bei höherer Temperatur mit Impulsen höherer Flankensteilheit und bei niedrigerer Temperatur mit Impulsen niedrigerer Flankensteilheit erfolgt.

3. Verfahren nach einem der Ansprüche 1 oder 2, **dadurch gekennzeichnet, daß** die Ansteuerung bei höherer Temperatur mit niedrigerer Trägerfrequenz erfolgt als bei niedrigerer Temperatur.

4. Verfahren nach einem der Ansprüche 1 bis 3, **dadurch gekennzeichnet, daß** ein allmählicher Übergang erfolgt.

5. Verfahren nach einem der Ansprüche 1 bis 3, **dadurch gekennzeichnet, daß** eine Umschaltung zwischen zwei Ansteuerungsarten erfolgt.

6. Verfahren nach einem der vorhergehenden Ansprüche, **dadurch gekennzeichnet, daß** der Übergang von einer Ansteuerung, die bei einer höheren Temperatur vorgesehen ist, auf eine Ansteuerung für eine niedrigere Temperatur zeitgesteuert nach dem Einschalten erfolgt.

7. Verfahren nach einem der Ansprüche 1 bis 5, **dadurch gekennzeichnet, daß** zwischen den Ansteuerungsarten in Abhängigkeit von einer gemessenen Temperatur gewählt wird.
